# EUROPÄISCHE PATENTSCHRIFT

(11) **EP 2 109 721 B1**
(45) Veröffentlichungstag und Bekanntmachung des Hinweises auf die Patenterteilung: **06.03.2013**
(21) Anmeldenummer: 08707993.5
(22) Anmeldetag: 18.01.2008
(51) Int. Cl.: F16D 3/38, F16D 3/41

(54) **LAGERANORDNUNG FÜR EIN KREUZGELENK**
BEARING ARRANGEMENT FOR A UNIVERSAL JOINT
ENSEMBLE PALIER POUR JOINT DE CARDAN

(30) Priorität: 19.01.2007 DE 102007003789
(43) Veröffentlichungstag der Anmeldung: 21.10.2009
(73) Patentinhaber: Elbe Holding GmbH & Co. KG, 74321 Bietigheim-Bissingen (DE)
(72) Erfinder: BRAUN, Achim, 71665 Vaihingen/Enz (DE); SCHMIDT, Thomas, 36282 Hauneck (DE)
(74) Vertreter: Thews, Karl
(86) Internationale Anmeldenummer: PCT/EP2008/050549
(87) Internationale Veröffentlichungsnummer: WO 2008/087203

(56) Entgegenhaltungen:
- EP-A- 1 719 928
- DE-A1- 19 840 336
- DE-A1-102004 049 405
- DE-U- 1 907 637
- US-A1- 2004 247 386
- US-A1- 2005 037 850
- US-A1- 2006 073 901
- US-A1- 2006 189 395

## Beschreibung

Die Erfindung bezieht sich auf eine gesicherte Lageranordnung für zumindest einen um eine Drehachse drehbaren Zapfen eines Kreuzgelenks, der in einem Gehäuse gelagert ist. Diese Lageranordnung weist zumindest ein Kreuzgelenkgehäuse eines Kreuzgelenks mit zumindest einer in Richtung einer Achse verlaufenden Bohrung mit einer Innenfläche als Lagerfläche auf. In der Bohrung ist eine Lagerbüchse mit einer Lagerachse auf der Innenfläche gelagert, in der der Zapfen um seine Drehachse drehbar lagerbar ist. Durch ein Sicherungselement wird die Lagerbüchse innerhalb der Bohrung in die vom Zapfen abgewandte axiale Richtung der Lagerachse gesichert. Das Sicherungselement ist in radialer Richtung der Lagerachse zwischen der montierten Lagerbüchse und dem Kreuzgelenkgehäuse angeordnet und gleichzeitig zwischen der montierten Lagerbüchse und dem Kreuzgelenkgehäuse mit dem Kreuzgelenkgehäuse verbunden.

Bei vielen gattungsgemäßen Kreuzgelenken wird die Lagerbüchse, die auf dem Zapfen sitzt, durch einen Sicherungsring in axialer Richtung gesichert. Der Sicherungsring wird vor die Lagerbüchse in eine umlaufende Nut im Gehäuse eingesetzt. Hierzu steht das Gehäuse über die Lagerbüchse um mehrere Millimeter nach vorne über. Diese grundsätzliche Vorgehensweise ist beispielsweise aus der US 2005/0037850 A1 bekannt. Ein als Sicherungsring ausgebildetes Sicherungselement wird in Richtung der Lagerachse der Lagerbüchse vor die Lagerbüchse im Gehäuse in eine Nut eingesetzt. Durch die stufenförmige Ausgestaltung des Sicherungsrings mit verschiedenen Durchmessern ist es möglich, das Spiel in Richtung der Lagerachse zwischen der Lagerbüchse und dem Zapfen einzustellen.

Aus der US 2006/0189395 A1 ist eine ähnliche Vorgehensweise bekannt, bei der der Sicherungsring nicht nur auf der Außenseite gestuft, mit unterschiedlichen Durchmessern sondern auch auf der Innenseite zwei umlaufende Flächen mit unterschiedlichen Durchmessern aufweist, so dass der Teil des Sicherungsrings, der in die umlaufende Nut im Gehäuse eingreift einen Innendurchmesser aufweist, der größer als der Außendurchmesser der Lagerbüchse ist.

Gegenüber der vorstehend beschriebenen Methode der Lagersicherung wird zur Steigerung des übertragbaren Drehmoments eine längere Lagerbüchse eingesetzt, die der Länge der Bohrung entspricht. Der Sicherungsring wird hierbei nicht mehr vor die Lagerbüchse, sondern zwischen die Lagerbüchse und das Gehäuse in eine Nut in der Lagerfläche des Gehäuses oder in eine Nut in der Lagerbüchse eingesetzt. In der EP 1 719 928 A2 ist eine solche axiale Sicherungsanordnung beschrieben, bei der der Sicherungsring in Richtung der Drehachse des Zapfens, also in axialer Richtung nicht vor der Lagerbüchse, sondern im Bereich der äußeren Seitenfläche der Lagerbüchse um die Lagerbüchse umlaufend angeordnet ist. Dabei schlägt die Lagerbüchse nicht, wie in der US 2005/0037850 A1 beschrieben, mit der Stirnfläche in axialer Richtung an das Sicherungselement an, sondern das Sicherungselement schneidet in die Lagerflächen des Gehäuses oder der Lagerbüchse, wodurch die Oberflächen dieser Lagerflächen beschädigt wird.

Ein Vorteil der in der EP 1 719 928 A2 beschriebenen Lagerung gegenüber der eingangs genannten Technik ist, dass durch die Verlagerung des Sicherungsrings von vor der Lagerbüchse in einen Bereich zwischen die Lagerbüchse und das Gehäuse, die Länge der Lagerbüchse vergrößert werden kann, da die Lagerbüchse sich über die gesamte Länge des Gehäuses erstrecken kann. Dies führt zu einer Steigerung des übertragbaren Drehmoments und zu einer Steigerung der Lebensdauer. Die EP 1 719 928 A2 wird als nächstliegender Stand der Technik betrachtet.

Ausgehend von der EP 1 719 928 A2 liegt der Erfindung die Aufgabe zugrunde, die Lagerung der Zapfen eines Kreuzgelenks derart auszubilden, dass die Lagerflächen im Kreuzgelenkgehäuse und auf der Lagerbüchse weder bei der Montage noch bei der Demontage der Lageranordnung beschädigt werden und bei einer erneuten Montage, die bei der Herstellung erzeugten Maßtoleranzen in allen Bereichen der Lagerflächen erhalten bleiben, wobei gleichzeitig die gesamte Gehäuselänge für die Lagerbüchse zu Verfügung steht.

Gelöst wird die Aufgabe erfindungsgemäß dadurch, dass das Kreuzgelenkgehäuse an der Bohrung eine Senkung aufweist, die eine zur Bohrung koaxiale und parallele Fläche ausbildet und der Sicherungsdeckel über die Fläche formschlüssig mit dem Kreuzgelenkgehäuse verbunden werden kann. Je nach Größe des Profils des Sicherungsdeckels ist es vorteilhaft, dass die Senkung, vom Beginn der Öffnung der Bohrung an eine Tiefe zwischen 3 mm und 35 mm aufweist, damit der Sicherungsdeckel mit dem entsprechenden Lagerspiel in Richtung der Lagerachse in Bezug auf den Zapfen justiert werden kann. Die Tiefe der Senkung entspricht der Breite der Fläche, welche die Senkung bildet.

Hierdurch wird erreicht, dass der Sicherungsdeckel weder bei der Montage noch bei der Demontage des Sicherungsdeckels in die als Lagerfläche vorgesehene Innenfläche der Bohrung einschneidet. In dem Bereich, in dem die Senkung vorgesehen ist, liegt die Lagerbüchse selbst nicht am Kreuzgelenkgehäuse an. Der Sicherungsdeckel ist dabei über das Kreuzgelenkgehäuse fixiert, was dahingehend vorteilhaft ist, dass auch nicht die Lagerfläche der Lagerbüchse durch den Sicherungsdeckel beschädigt wird. Die Bewegung der Lagerbüchse auf dem Zapfen wird durch den Sicherungsdeckel nur in der vom Zapfen abgewandten Richtung der Drehachse begrenzt. Somit greift der Sicherungsdeckel nicht an einer Lagerfläche an, weder an der Innenfläche der Bohrung noch an der Lagerfläche der Lagerbüchse.

Durch die Vorwendung von Kolbstoff wird erreicht, dass weder die Innenfläche der Bohrung noch die Lagerfläche der Lagerbüchse durch das Sicherungselement beschädigt wird. Für die Montage der Lagerbüchse wird Klebstoff auf die Lagerfläche der Lagerbüchse oder auf die Innenfläche der Bohrung aufgetragen und die Lagerbüchse in die Bohrung eingepresst, wobei sich eine Klebstoffschicht zwischen der Lagerbüchse und dem Kreuzgelenkgehäuse bildet und der überschüssige Klebstoff durch die Kante der Bohrung abgeschabt wird. Unter Einfluss des radialen Drucks zwischen der Lagerbüchse und dem Kreuzgelenkgehäuse härtet der Klebstoff aus. Die Lagerflächen bleiben unversehrt. Bei der möglichen Demontage der Lagerbüchse wird die Klebeschicht gelöst, wobei die Lagerflächen ebenfalls nicht beschädigt werden.

Die erfindungsgemäße Lösung hat den weiteren Vorteil, dass nach dem Einbau der Lagerbüchse erkennbar ist, ob das Sicherungselement eingesetzt ist, was im nächstliegenden Stand der Technik nicht möglich ist, da das Sicherungselement in montiertem Zustand nicht sichtbar ist. Es kann aber auch nicht durch Herausnehmen oder Bewegen der Lagerbüchse geprüft werden ob der Sicherungselement montiert ist, da die Lagerbüchse aufgrund der Presspassung im Kreuzgelenkgehäuse festsitzt.

Hierzu ist es vorteilhaft, dass der Durchmesser der Senkung zwischen 1,5 mm und 8 mm größer als der Durchmesser der Bohrung sein kann. Je nach dem, welche Größe der Sicherungsdeckel aufweist und wie der Sicherungsdeckel im Kreuzgelenkgehäuse fixiert wird, sind Senkungen mit unterschiedlichen Durchmessern notwendig.

Besonders vorteilhaft ist, dass der Sicherungsdeckel mit einem die Stirnseite der Lagerbüchse umgebenden U-förmigen Profil ausgebildet und teilweise zwischen der Lagerbüchse und dem Kreuzgelenkgehäuse angeordnet sein kann und der Sicherungsdeckel die Lagerbüchse in Umfangsrichtung zur Achse zumindest teilweise umschließt. Durch die in Bezug auf die Querschnittsebene der Lagerachse U-förmige Ausgestaltung des Sicherungsdeckels, greift der Sicherungsdeckel von der Stirnseite der Lagerbüchse nach Innen in die Bohrung hinein und umschließt die Lagerbüchse, so dass er in einen Bereich zwischen der Lagerbüchse und dem Kreuzgelenkgehäuse an das Kreuzgelenkgehäuse anschließt. Dadurch ist der Sicherungsdeckel auch nach der Montage nicht durch die Lagerbüchse oder ein anderes Bauteil verdeckt und kann jederzeit wieder demontiert werden, ohne die Lagerbüchse zu demontieren. Dies ist im Zusammenhang mit der Aufgabe, die Lagerflächen nicht zu beschädigen sehr vorteilhaft, da die Lageranordnung somit ohne großen Aufwand gewartet werden kann.

In Bezug auf die Gestaltung des U-Profils ist es vorteilhaft, dass der Sicherungsdeckel eine Mittelachse aufweisen kann, die koaxial zu der Achse der Bohrung positionier-bar ist, wobei der Sicherungsdeckel ein koaxial zur Mittelachse angeordnetes und sich in Richtung der Mittelachse erstreckendes zylinderförmiges Mantelteil aufweisen kann und der Sicherungsdeckel über das Mantelteil in der Bohrung in eine axiale Richtung der Mittelachse im Kreuzgelenkgehäuse festsetzbar ist. Das Mantelteil erstreckt sich in seiner Länge vom Inneren des Kreuzgelenkgehäuses, wo der Sicherungsdeckel am Kreuzgelenkgehäuse festgesetzt wird, bis in den Bereich vor der Stirnfläche der Lagerbüchse, so dass das Mantelteil den in Richtung der Lagerachse äußersten Teil der Lagerbüchse in Umfangsrichtung umschließt. Die Größe des U-Profils ist maßgeblich abhängig von der Länge des Mantelteils.

In Bezug auf das U-Profil ist es weiter von Vorteil, dass der Sicherungsdeckel ein an das Mantelteil anschließendes und sich in Bezug zu der Mittelachse in radialer Richtung nach Innen zu der Mittelachse hin erstreckendes scheibenförmiges Lagerteil mit einer Lagerfläche aufweisen kann und die Lagerfläche des Sicherungsdeckels zumindest teilweise an die Stirnfläche der Lagerbüchse anlegbar ist. Durch das Lagerteil wird erreicht, dass die Lagerbüchse in der vom Zapfen abgewandten axialen Richtung der Lagerachse durch einen stirnseitigen Anschlag ohne Eingriff in die Lagerfläche gesichert ist und der Sicherungsdeckel gleichzeitig von vorne, also von der Seite Stirnfläche über das Lagerteil demontierbar ist.

Auch ist es vorteilhaft, dass das Mantelteil eine konzentrisch zur Mittelachse angeordnete und zylinderförmige Montagefläche aufweisen kann und die Montagefläche mittel- oder unmittelbar an eine im Kreuzgelenkgehäuse vorgesehene Fläche anlegbar sein kann. Über die Montagefläche, die parallel zur Fläche der Senkung verläuft, kann der Sicherungsdeckel ausgerichtet und im Gehäuse form- und/oder kraftschlüssig fixiert werden.

In einer besonderen Ausführungsform ist vorgesehen, dass der Sicherungsdeckel über die Montagefläche mit Hilfe von Klebstoff an der Fläche in axialer und radialer Richtung der Mittelachse festsetzbar ist. Hierbei weisen die Montagefläche des Sicherungsdeckels und die Fläche der Bohrung eine bestimmte Lagerpassung auf, so dass der Sicherungsdeckel zunächst aufgrund von Reibung zwischen der Montagefläche und der Fläche positionierbar und in einem zweiten Schritt nach dem Aushärten des Klebers fixiert ist.

In einer weiteren Ausgestaltung ist vorgesehen, dass der Sicherungsdeckel zumindest ein am Mantelteil angeordnetes Befestigungsmittel aufweist und der Sicherungsdeckel über das Befestigungsmittel form- und/oder reibschlüssig in axialer und in radialer Richtung der Mittelachse an der Fläche festsetzbar ist. Das Befestigungsmittel ist bezüglich der Lagerachse radial nach Außen gerichtet und dringt in die Oberfläche der Fläche der Senkung ein.

Hierzu ist es vorteilhaft, dass das Befestigungsmittel in Bezug auf die Mittelachse zumindest teilweise in radialer Richtung nach Außen gerichtet als Kralle oder Gewinde ausgebildet ist und der Sicherungsdeckel über das Befestigungsmittel und die Fläche im Kreuzgelenkgehäuse kraft- und/oder formschlüssig festgesetzt werden kann. Vorteilhaft ist eine Kralle, die bei der Bewegung des Sicherungsdeckels in die vom Zapfen abgewandte axiale Richtung der Lagerachse selbsthemmend in die Oberfläche der Senkung einschneidet und bei einer Bewegung in die entgegengesetzte Richtung auf den Zapfen zu über die Fläche der Senkung gleitet.

Es besteht eine weitere bevorzugte Alternative darin, dass die Fläche der Senkung ein Innengewinde für das als Gewinde ausgebildete Befestigungsmittel aufweist. Das Außengewinde ist in die Montagefläche eingeschnitten, so dass der Sicherungsdeckel, ähnlich wie eine Wurmschraube, in das Kreuzgelenkgehäuse eingedreht werden kann. Für die Sicherung des Sicherungsdeckels ist vorgesehen, Kleber in das als Befestigungsmittel ausgebildete Gewinde einzubringen, damit der Sicherungsdeckel nach der Montage nicht in Bezug auf das Kreuzgelenkgehäuse verdreht. Alternativ ist vorgesehen, an dem Gewinde selbsthemmende Haken anzuformen, die eine Dreh- und Schraubbewegung des Sicherungsdeckels nur in eine Drehrichtung des Sicherungsdeckels zulassen. Eine weitere Alternative sieht vor, einen Teil an den Sicherungsdeckel anzuformen, der nach der Montage des Sicherungsdeckels gegen das Gehäuse oder gegen die Lagerbüchse verbogen wird und dieses Teil in Umfangsrichtung am Kreuzgelenkgehäuse anschlägt, so dass sich der Sicherungsdeckel nicht verdrehen kann.

In Bezug auf die Montage und die Demontage des Sicherungsdeckels ist es vorteilhaft, dass der Sicherungsdeckel Umfangsrichtung zur Mittelachse nicht geschlossen ist und der Sicherungsdeckel in Umfangsrichtung zusammengedrückt werden kann. Der Sicherungsdeckel ist teilkreisscheibenförmig ausgebildet oder weist zumindest eine in radialer Richtung zur Mittelachse angeordnete Trennfuge auf, so dass der Sicherungsdeckel kein geschlossenes scheibenförmiges Element bildet und in Umfangsrichtung zusammengedrückt werden kann. Dadurch ist die Justierung des Sicherungsdeckels beim Einsatz von Krallen sowohl in die nicht selbsthemmende Richtung einfacher, als auch in die selbsthemmende Richtung, weil der Druck der Krallen auf die Senkung reduziert wird, wenn der Sicherungsdeckel im Durchmesser verkleinert wird. Für die Demontage wird der Sicherungsdeckel im Durchmesser soweit reduziert, dass die Krallen frei liegen und der Sicherungsdeckel aus der Bohrung herausgenommen werden kann. Hierzu ist es vorteilhaft, dass die Trennfuge als Sollbruchstelle ausgebildet und zumindest teilweise geschlossen sein kann. Dadurch, dass die Trennfuge geschlossen ist, ist die Eigenspannung des Sicherungsdeckels in Umfangsrichtung wesentlich größer, da der Sicherungsdeckel in Umfangsrichtung weniger elastisch ist. Die Eigenspannung wird bei geschlossener Fuge vornehmlich durch das Mantelteil aufgebracht.

Eine einfache Montage und Demontage und gleichzeitig eine erhöhte Stabilität wird dadurch erreicht, dass die Trennfuge zumindest teilweise mit einem Lötmittel gefüllt sein kann. Für die Montage ist die Trennfuge offen, damit sich der Durchmesser des Sicherungsdeckels einfach reduzieren lässt, sich die Krallen nacheinander lösen und der Sicherungsdeckel herausgenommen werden kann. Nach der Montage wird die Trennfuge mit dem Lötmittel geschlossen, damit der Sicherungsdeckel stabiler beziehungsweise steifer wird. Für die Demontage wird die Trennfuge wieder geöffnet, in dem das Lötmittel erwärmt wird und so die Trennfuge freigegeben wird.

Vorteilhaft ist es hierzu, dass in dem Lagerteil Aufnahmen vorgesehen sind, über die der Sicherungsdeckel mit einem Werkzeug zusammengedrückt in seinem Durchmesser reduziert werden kann. Im einfachsten Falle sind die Aufnahmen als Löcher ausgebildet, in die mit einer Sicherungsring- oder Spitzzange eingegriffen werden kann, um den Sicherungsdeckel zusammenzudrücken.

Außerdem ist es vorteilhaft, dass der Sicherungsdeckel, bestehend aus dem Mantelteil und dem Lagerteil, als einstückiges und materialidentisches Bauteil ausgebildet ist. Der Sicherungsdeckel wird zunächst ausgestanzt, danach tiefgesenkt oder gebogen und anschließend, je nach Art des Befestigungsmittels, wenn nötig geschliffen oder gedreht.

Als Variante hierzu ist es vorteilhaft, dass der Sicherungsdeckel, bestehend aus dem Mantelteil und dem Lagerteil, als einstückiges Bauteil unter Verwendung von zumindest zwei unterschiedlichen Baumaterialien gebildet ist. Hierbei kommt bspw. die Kombination von Metall mit Kunststoff oder Keramik in Betracht.

Bevorzugt ist ein Lagersystem mit zwei jeweils als Kreuzgelenkgabel ausgebildeten Kreuzgelenkgehäusen, die über eine einteiliges Gelenkkreuz mit vier Zapfen und vier als Gelenkkreuzbüchse ausgebildeten Lagerbüchsen drehbar verbunden sind. Jedes Kreuzgelenkgehäuse weist zwei in Flucht angeordnete Bohrungen auf, so dass jeweils eine von vier Lagerbüchsen mit einem Zapfen in jeweils einer Bohrung in jeweils einem Teil der Kreuzgelenkgabel sitzt.

Im Allgemeinen und im Sinne der Erfindung ist eine Bohrung rotationssymmetrisch zur Bohrachse, so dass eine in der Bohrung angeordnete Lagerbüchse und auch ein Zapfen oder eine Welle zueinander zentriert ausgerichtet sind und mit der Lagerachse bzw. mit der Drehachse oder Achse koaxial zur Bohrung angeordnet sind. Die im Rahmen der Erfindung beschriebene Lagerbüchse muss nicht zwingend vollständig rotationssymmetrisch sein, jedoch weist sie eine Lagerachse auf, um die der Zapfen dreht. Die Lagerbüchse unterscheidet sich von einer Lagerbuchse dadurch, dass sie auf einer Seite geschlossen ist.

Weitere Vorteile und Einzelheiten der Erfindung sind in den Patentansprüchen und der Beschreibung erläutert sowie in den Figuren dargestellt. Es zeigt:
- Figur 1: eine perspektivische Schnittansicht eines Kreuzgelenks mit einem Sicherungsdeckel (rechts) und einem Sicherungsring gemäß dem Stand der Technik (links);
- Figur 2: eine perspektivische Schnittansicht eines Kreuzgelenks gemäß Fig. 1 in montiertem Zustand;
- Figur 3: eine Schnittansicht einer Lageranordnung bestehend aus einem Gehäuse und zwei gegenüber angeordneten Lagerbüchsen;
- Figur 4a: eine Schnittansicht eines Kreuzgelenkgehäuses mit einer Senkung;

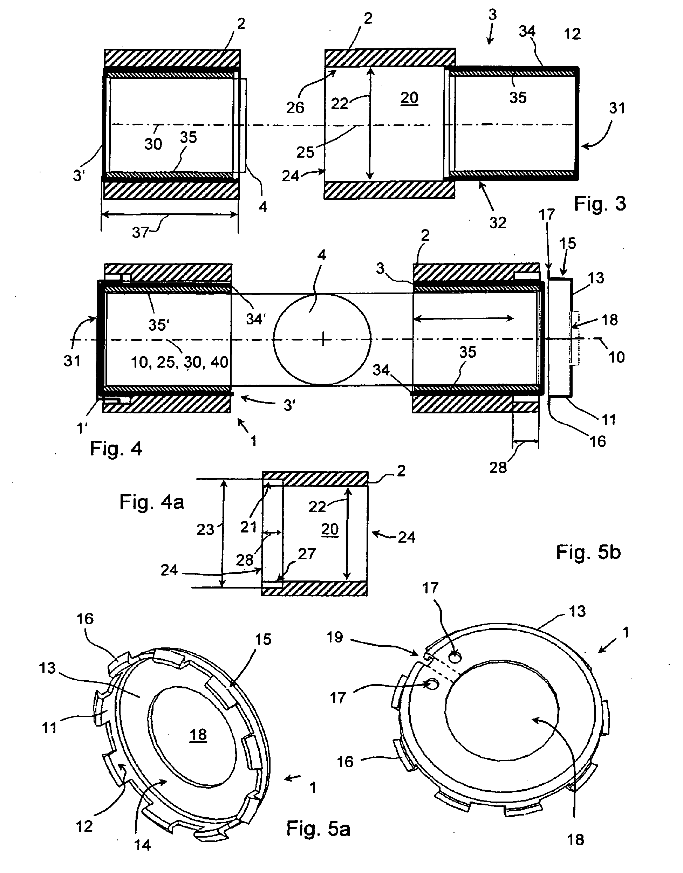

- Figur 4: eine Schnittansicht einer Lageranordnung bestehend aus einem Gehäuse, zwei gegenüber angeordneten Lagerbüchsen und jeweils einem Sicherungsdeckel für jede Lagerbüchse;
- Figur 5a: eine perspektivische Ansicht eines Sicherungsdeckels mit Krallen von unten;
- Figur 5b: eine perspektivische Ansicht eines Sicherungsdeckels mit Krallen und Aufnahmen von oben.

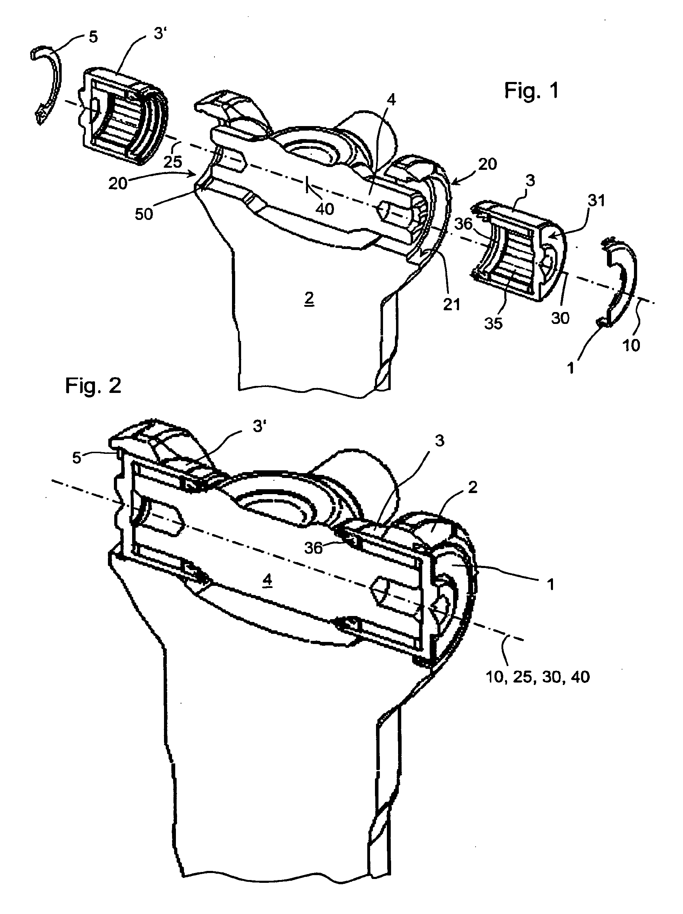

Die in Fig. 1 und 2 gezeigte Lageranordnung ist in ein Kreuzgelenk integriert, von dem eine Hälfte eines Gelenkkreuzes mit seinen Zapfen 4 und das untere von zwei Kreuzgelenkgehäusen 2 teilweise dargestellt ist. Jeder einzelne Zapfen 4 des Gelenkkreuzes wird separat über eine Lagerbüchse 3 im Kreuzgelenkgehäuse 2 gelagert. Hierzu ist der Zapfen 4 in die jeweilige Bohrung 20 des Kreuzgelenkgehäuses 2 in das Kreuzgelenkgehäuse 2 eingeführt und die Lagerbüchse 3 von Außen in die Bohrung 20 des Kreuzgelenkgehäuses 2 eingepresst und dabei auf den Zapfen 4 aufgeschoben.

In Fig. 1 und 2 ist jeweils eine perspektivische Schnittansicht des Kreuzgelenkgehäuses 2 mit den beiden gegenüber liegend angeordneten Lagerbüchsen 3, 3' dargestellt. Die jeweils rechte Lagerbüchse 3 ist durch einen erfindungsgemäßen Sicherungsdeckel gesichert. Der Sicherungsdeckel 1 ist über die Lagerbüchse 3 übergestülpt und zwischen der Lagerbüchse 3 und der Bohrung 20 am Kreuzgelenkgehäuse 2 befestigt.

Die in Fig. 1 und 2 jeweils auf der linken Seite dargestellte Lagerbüchse 3' ist durch eine Ausführungsform der Lageranordnung gesichert, wie sie im Stand der Technik bekannt ist. Dabei ist ein Sicherungsring 5 in radialer Richtung zur Drehachse 40 in eine Nut 50 in das Kreuzgelenkgehäuse 2 eingesetzt und die Lagerbüchse 3' in axialer Richtung zur Drehachse 40 nach Außen fixiert.

Die Lagerbüchse 3 weist, wie auch in Fig. 3 und 4 im Detail dargestellt, eine als Gehäuse ausgebildete, geschlossene, zylinderförmige Büchse 34 mit einer äußeren Stirnfläche 31 und einer zylinderförmigen, äußeren Lagerfläche 32 auf. Über die Lagerfläche 32 ist die Lagerbüchse 3 in radialer Richtung zu der Lagerachse 30 an der Innenfläche 26 der Bohrung 20 im Kreuzgelenkgehäuse 2 gelagert. Innerhalb der Büchse 34 ist ein Wälzlager 35 angeordnet, das mehrere zylinderförmige Wälzkörper umfasst, die parallel zur Lagerachse 30 rotierbar auf der Innenseite der Büchse 34 angeordnet sind. Zwischen der Lagerbüchse 3 und dem Zapfen 4 ist ein Schmiermittel eingebracht, so dass die Lagerbüchse 3 über eine Dichtung 36 gegenüber dem Zapfen 4 abgedichtet ist und das Schmiermittel nicht aus der Lagerbüchse 3 austreten kann.

In Fig. 3 ist eine Lageranordnung vereinfacht dargestellt, bei der die Sicherung der Lagerbüchsen 3, 3' durch eine nicht dargestellte Klebestoffschicht als Sicherungselement in der Bohrung 20 des Kreuzgelenkgehäuses 2 vorgesehen ist. Die linke Lagerbüchse 3' ist auf den nur teilweise dargestellten Zapfen 4 aufgebracht und über ihre gesamte Länge 37 in der Bohrung 20 des Kreuzgelenkgehäuses 2 gelagert. Auf der rechten Seite der Fig. 3 ist der Zapfen 4 aus Gründen der Übersichtlichkeit nicht dargestellt. Die Lagerbüchse 3 und die Bohrung 20 im Kreuzgelenkgehäuse 2 weisen eine Presspassung auf, so dass der Durchmesser der Lagerbüchse 3 geringfügig größer ist als der Durchmesser 22 der Bohrung 20 im Kreuzgelenkgehäuse 2. Die Lagerbüchse 3 besteht einer Büchse 34 und einem Wälzlager 35. Die Büchse 34 bildet die Lagerfläche 32 der Lagerbüchse 3, über die die Lagerbüchse 3 auf der Innenfläche 26 der Bohrung 20 gelagert ist. Dabei ist die Lagerbüchse 3 mit ihrer Lagerachse 30 koaxial zur Achse 25 der Bohrung 20 angeordnet.

In Fig. 4 ist eine Lageranordnung vereinfacht dargestellt, bei der ein Sicherungsdeckel 1 zum Fixieren der Lagerbüchse 3 vorgesehen ist. Der Zapfen 4 ist wie in Fig. 4 angedeutet und in Fig. 1 und Fig. 2 gezeigt, als Gelenkkreuzzapfen ausgebildet und wird mittelbar über jeweils eine Lagerbüchse 3, 3' in den beiden Bohrungen 20 des Kreuzgelenkgehäuses 2 gelagert. Die beiden Lagerbüchse 3, 3' werden durch jeweils einen Sicherungsdeckel 1, 1' mit einer in den durch einen Pfeil dargestellten axialen Richtungen der Drehachse 40 nach außen hin gesichert.

Zum Befestigen des Sicherungsdeckels 1 weist die Bohrung 20, wie in Fig. 4a dargestellt, eine Senkung 27 mit einer Fläche 21 auf, die parallel und koaxial zur Innenfläche 26 der Bohrung 20 angeordnet ist, wobei die Senkung 27 ausgehend von der Öffnung 24 der Bohrung 20 eine Tiefe 28 zwischen 3 mm und 35 mm aufweist. Der Durchmesser 23 der Senkung 27 ist größer als der Durchmesser 22 der Bohrung 20, damit der Sicherungsdeckel 1 zwischen der Lagerbüchse 3 und dem Kreuzgelenkgehäuse 2 befestigt werden kann. Der Sicherungsdeckel 1 dient als Anschlag für die Lagerbüchse 3 und wird derart in axialer Richtung positioniert, dass zwischen der Lagerbüchse 3 und dem jeweiligen Zapfen 4 ein gewisses Spiel in axialer Richtung der Drehachse 40 vorhanden ist. Wie nachstehend erläutert lässt sich der Sicherungsdeckel 1 stufenlos verstellen, so dass das notwendige Spiel einfach und exakt einstellbar ist. Die Tiefe 28 der Senkung 27 variiert in Abhängigkeit der Größe des Sicherungsdeckels 1.

Nachdem der Zapfen 4 in die Bohrung 20 des Gehäuses 2 eingeführt ist, wird die Lagerbüchse 3 über den Zapfen 4 in die Bohrung 20 eingepresst und das Spiel in axialer Richtung der Drehachse 20 bzw. Lagerachse 30 eingestellt. Hierzu weist der Sicherungsdeckel 1 ein koaxial zur Lagerbüchse 3 positionierbares Mantelteil 11 und ein an das Mantelteil 11 in radialer Richtung nach Innen anschließendes Lagerteil 13 auf. Das Mantelteil 11 weist eine nach Außen gerichtete und koaxial sowie parallel zur Fläche 21 der Senkung 27 angeordnete Montagefläche 15 auf, über die der Sicherungsdeckel 1 am Kreuzgelenkgehäuse 2 befestigt wird. Ferner weist das Lagerteil 13 eine nach innen gerichtete Lagerfläche 14 auf, die als Anschlag für die zum Lagerteil 13 parallel verlaufende Stirnseite des Zapfens 4 dient.

An das Mantelteil 11 schließen wie in Fig. 5a verdeutlicht auf der außenliegenden Montagefläche 15 mehrere in Umfangsrichtung um die Mantelfläche 12 angeordnete, in Umfangsrichtung beabstandete und als Krallen ausgebildete Befestigungsmittel 16 an. In diesem Ausführungsbeispiel ist ein Sicherungsdeckel 1 dargestellt, an dem neun jeweils zueinander in Umfangsrichtung beabstandete Krallen 16 angeordnet sind. Die in radialer Richtung zur Mittelachse 10 nach Au-βen gerichteten Krallen 16 gleiten beim Einführen des Sicherungsdeckels 1 in die Bohrung 20 auf einer koaxial zur Bohrung 20 vorgesehenen Fläche 21 in das Gehäuseinnere. Aufgrund der Formgebung der Krallen 16 entsteht ein selbsthemmender Effekt, aufgrund dessen der Sicherungsdeckel 1 in axialer Richtung der Lagerachse nur in die Bohrung 20 in das Kreuzgelenkgehäuse 2 hinein-, aber nicht mehr aus der Bohrung 20 herausgezogen oder herausgedrückt werden kann. Somit bewirken die Krallen 16 eine Selbsthemmung in die vom Zapfen 4 abgewandte axiale Richtung der Lagerachse 30. Eine in radialer Richtung jeweils am Ende der Krallen 16 gebildete Schneide dringt je nach Materialwahl und Spannung mehr oder weniger, jedoch zumindest im sichtbaren Bereich in die Fläche 21 ein, sobald auf den Sicherungsdeckel 1 Druck in Richtung aus dem Kreuzgelenkgehäuse 2 heraus ausgeübt wird. Die dadurch gebildeten Vertiefungen in der Fläche 21 wirken als formschlüssige Fixierung des Sicherungsdeckels 1 und somit über die Lagerbüchse 3 als axiale Sicherung des Zapfens 4.

Die über die Krallen 16 bewirkte Haltekraft wird über das Mantelteil 11 auf ein rechtwinklig zum Mantelteil 11 angeordnetes und an das Mantelteil 11 anschließendes Lagerteil 13 übertragen. Das Lagerteil 13 ist parallel zu der Stirnfläche 31 der Lagerbüchse 3 angeordnet, so dass der Zapfen 4 über die Lagerbüchse 3 an dem Lagerteil 13 anschlägt. Hierzu weist das Lagerteil 13 die nach Innen gerichtete Lagerfläche 14 auf, die je nach Lagerspiel an der Stirnfläche 31 der Lagerbüchse 3 anliegt.

Das Lagerteil 13 ist kreisscheibenförmig und weist in diesem Ausführungsbeispiel im Zentrum eine Ausnehmung 18 auf. Durch diese Ausnehmung 18 kann das Spiel zwischen dem Lagerteil 13 und dem Zapfen 4 kontrolliert werden. Ferner besteht die Möglichkeit, an der Stirnfläche 31 oder Boden der Lagerbüchse 3 einen Schmiernippel anzuordnen, der über die Ausnehmung 18 zugänglich ist.

Für den Fall, dass der Zapfen 4 oder die Lagerbüchse 3 demontiert werden muss, kann der Sicherungsdeckel 1 entfernt werden. Hierzu wird das Lagerteil 13 des Sicherungsdeckels 1 an einer Stelle in radialer Richtung zur Mittelachse 10 oder in einer anderen Richtung durchtrennt, so dass der Sicherungsdeckel 1 bzw. das Lagerteil 13 allein schon durch die dabei entstehende Trennfuge 19 im Durchmesser verkleinert werden kann. Die Demontage des Sicherungsdeckels 1 wird dadurch einfacher, dass der Sicherungsdeckel 1 eine Trennfuge 19 aufweist, die in radialer Richtung zur Mittelachse 10 verläuft und den Sicherungsdeckel 1 teilweise durchtrennt. Die Trennfuge 19 muss nur noch weiter durchtrennt werden, um den Sicherungsdeckel 1 zu demontieren. Die Trennfuge 19 wird zwischen zwei beabstandeten Krallen 16 erzeugt, damit der Sicherungsdeckel 1 einfacher zu durchtrennen ist.

In Fig. 5b ist die schon teilweise vorgefertigte Trennfuge 19 gestrichelt dargestellt, die für die Demontage weiter aufgetrennt werden kann. Nach dem Auftrennen kann der Sicherungsdeckel 1 mit einem entsprechenden und nicht dargestellten Werkzeug, das in entsprechende als Löcher ausgebildete Ausnehmungen 10 eingesetzt wird, in Umfangsrichtung zusammen gedrückt werden. Dabei lösen sich die Krallen 16, so dass der Sicherungsdeckel 1 entfernt werden kann.

Im Ausführungsbeispiel nach Fig. 5b ist die Trennfuge 19 eine Art Sollbruchstelle, so dass durch mechanischen Einfluss eine Trennfuge 19 erzeugt werden kann. Alternativ ist vorgesehen, die Sollbruchstelle derart auszubilden, dass durch thermischen Einfluss eine Trennfuge 19 erzeugt wird. Hierzu wird bspw. die vorgefertigte Trennfuge 19 mit einem Lötmetall gefüllt, welches einfach zum Schmelzen gebracht werden kann, so dass sich die Trennfuge 19 öffnet.

### Bezugszeichenliste

- 1: Sicherungselement, Sicherungsdeckel
- 1': Sicherungsdeckel
- 10: Mittelachse
- 11: Mantelteil
- 12: Mantelfläche
- 13: Lagerteil
- 14: Lagerfläche
- 15: Montagefläche
- 16: Befestigungsmittel, Kralle, Außengewinde
- 17: Aufnahme
- 18: Ausnehmung
- 19: Trennfuge
- 2: Gehäuse
- 20: Bohrung
- 21: Fläche
- 22: Durchmesser
- 23: Durchmesser
- 24: Öffnung
- 25: Achse
- 26: Innenfläche
- 27: Senkung
- 28: Tiefe
- 3: Lagerbüchse
- 3': Lagerbüchse
- 30: Lagerachse
- 31: Stirnfläche, Boden
- 32: Lagerfläche
- 33: Stirnseite
- 34: Büchse
- 34': Büchse
- 35: Wälzlager
- 35': Wälzlager
- 36: Dichtung
- 4: Zapfen
- 40: Drehachse
- 5: Sicherungsring (Stand der Technik)
- 50: Nut (Stand der Technik)

## Patentansprüche

1. Gesicherte Lageranordnung für zumindest einen um eine Drehachse (40) drehbaren Zapfen (4) eines Kreuzgelenks, aufweisend
a) zumindest ein Kreuzgelenkgehäuse (2) mit zumindest einer in Richtung einer Achse (25) verlaufenden Bohrung (20) mit einer Innenfläche (26) und
b) einer in der Bohrung (20) angeordneten Lagerbüchse (3) mit einer Lagerachse (30) für den Zapfen (4), in der der Zapfen (4) zumindest um seine Drehachse (40) drehbar lagerbar ist und
c) einem Sicherungselement (1) zum Sichern der Lagerbüchse (3) innerhalb der Bohrung (20) in die vom Zapfen (4) abgewandte axiale Richtung der Lagerachse (30), wobei
d) das Sicherungselement (1) in radialer Richtung der Lagerachse (30) zwischen der montierten Lagerbüchse (3) und dem Kreuzgelenkgehäuse (2) angeordnet und zwischen der montierten Lagerbüchse (3) und dem Kreuzgelenkgehäuse (2) mit dem Kreuzgelenkgehäuse (2) verbunden ist, **dadurch gekennzeichnet, dass**
e) das Kreuzgelenkgehäuse (2) an der Bohrung (20) eine Senkung (27) aufweist, die eine zur Bohrung (20) koaxiale und parallele Fläche (21) ausbildet und das Sicherungselement als rungsdeckel (1) über die Fläche (21) formschlüssig mit dem Kreuzgelenkgehäuse (2) verbunden ist, wobei die Senkung (27) ausgehend von der Öffnung (24) der Bohrung (20) eine Tiefe (28) zwischen 3 mm und 35 mm aufweist.

2. Lageranordnung nach Anspruch 1, **dadurch gekennzeichnet, dass** der Durchmesser (23) der Senkung (27) zwischen 1,5 mm und 8 mm größer als der Durchmesser (22) der Bohrung (20) ist.

3. Lageranordnung nach Anspruch 1 und/oder 2, **dadurch gekennzeichnet, dass** der Sicherungsdeckel (1) mit einem die Stirnseite (33) der Lagerbüchse (3) umgebenden U-förmigen Profil ausgebildet und teilweise zwischen der Lagerbüchse (3) und dem Kreuzgelenkgehäuse (2) angeordnet ist und der Sicherungsdeckel (1) die Lagerbüchse (3) in Umfangsrichtung zur Achse (25) zumindest teilweise umschließt.

4. Lageranordnung nach einem der vorstehenden Ansprüche, **dadurch gekennzeichnet, dass** der Sicherungsdeckel (1) eine Mittelachse (10) aufweist, die koaxial zu der Achse (25) positionierbar ist, wobei der Sicherungsdeekel (1) ein koaxial zur Mittelachse (10) angeordnetes und sich in Richtung der Mittelachse (10) erstreckendes zylinderförmiges Mantelteil (11) aufweist und der Sicherungsdeckel (1) über das Mantelteil (11) in der Bohrung (20) in eine axiale Richtung der Mittelachse (10) im Kreuzgelenkgehäuse (2) festsetzbar ist

5. Lageranordnung nach dem vorstehenden Anspruch, **dadurch gekennzeichnet, dass** der Sicherungsdeckel (1) ein an das Mantelteil (11) anschließendes und sich in Bezug zu der Mittelachse (10) in radialer Richtung nach Innen zu der Mittelachse (10) hin erstreckendes scheibenförmiges Lagerteil (13) mit einer Lagerfläche (14) aufweist und die Lagerfläche (14) des Sicherungsdeckels (1) zumindest teilweise an die Stirnfläche (31) der Lagerbüchse (3) anlegbar ist.

6. Lageranordnung nach einem der vorstehenden Ansprüche 4 bis 5, **dadurch gekennzeichnet, dass** das Mantelteil (11) eine konzentrisch zur Mittelachse (10) angeordnete und zylinderförmige Montagefläche (15) aufweist und die Montagefläche (15) mittel- oder unmittelbar an eine im Kreuzgelenkgehäuse (2) vorgesehene Fläche (21) anlegbar ist.

7. Lageranordnung nach dem vorstehendem Anspruch, **dadurch gekennzeichnet, dass** der Sicherungsdeckel (1) über die Montagefläche (15) mit Hilfe von Klebstoff an der Fläche (21) in axialer und radialer Richtung der Mittelachse (10) festsetzbar ist.

8. Lageranordnung nach Anspruch 6, **dadurch gekennzeichnet, dass** der Sicherungsdeckel (1) zumindest ein am Mantelteil (11) angeordnetes Befestigungsmittel (16) aufweist und der Sicherungsdeckel (1) über das Befestigungsmittel (16) form- und/oder reibschlüssig in axialer und in radialer Richtung der Mittelachse (10) an der Fläche (21) festsetzbar ist.

9. Lageranordnung nach dem vorstehenden Anspruch, **dadurch gekennzeichnet, dass** das Befestigungsmittel (16) in Bezug auf die Mittelachse (10) zumindest teilweise in radialer Richtung nach Außen gerichtet als Kralle oder Gewinde ausgebildet ist und der Sicherungsdeckel (1) über das Befestigungsmittel (16) und die Fläche (21) im Kreuzgelenkgehäuse (2) kraft- und/oder formschlüssig festgesetzt werden kann und/oder die Fläche (21) ein Innengewinde für das Befestigungsmittel (16) aufweist.

10. Lageranordnung nach einem der vorstehenden Ansprüche, **dadurch gekennzeichnet, dass** der Sicherungsdeckel (1) Umfangsrichtung zur Mittelachse (10) nicht geschlossen ist und der Sicherungsdeckel (1) in Umfangsrichtung zusammengedrückt werden kann, wobei der Sicherungsdeckel zumindest eine in radialer Richtung zur Mittelachse angeordnete Trennfuge aufweist.

11. Lageranordnung nach dem vorstchenden Anspruch, **dadurch gekennzeichnet, dass** die Trennfuge (19) als Sollbruchstelle ausgebildet und nach der Montage des Sicherungsdeckel in der Bohrung zumindest teilweise geschlossen werden Kann.

12. Lageranordnung nach dem vorstehenden Anspruch, **dadurch gekennzeichnet, dass** die Trennfuge (19) zumindest teilweise mit einem Lötmittel geschlossen werden Kann.

13. Lageranordnung nach dem vorstehenden Anspruch, **dadurch gekennzeichnet, dass** in dem Lagerteil (13) Aufnahmen (17) vorgesehen sind, über die der Sicherungsdeckel (1) mit einem Werkzeug in einem Durchmesser (22) reduziert werden kann.

## Claims

1. A secured bearing arrangement for at least one journal (4) of a universal joint, which journal is rotatable about an axis of rotation (40), comprising
a) at least one universal joint housing (2) having at least one bore (20) extending in the direction of an axis (25) and having an internal surface (26); and
b) a bearing bush (3) being arranged in the bore (20) and having a bearing axis (30) for the journal (4), in which bearing bush the journal (4) can be mounted to be rotatable at least about its axis of rotation (40); and
c) a securing element (1) for securing the bearing bush (3) within the bore (20) in a axial direction of the bearing axis (30) facing away from the journal (4), wherein
d) the securing element (1) is arranged between the mounted bearing bush (3) and the universal joint housing (2) in a radial direction of the bearing axis (30) and is connected to the universal joint housing (2) between the mounted bearing bush (3) and the universal joint housing (2), **characterized in that**
e) the universal joint housing (2) has a counterbore (27) at the bore (20), which counterbore forms a surface (21) being coaxial and parallel to the bore (20), and the securing element is connected by positive fit to the universal joint housing (2) as a securing lid (1) by way of said surface (21), wherein the counterbore (27) has a depth (28) between 3 mm and 35 mm starting from the opening (24) of the bore (20).

2. A bearing arrangement according to claim 1, **characterized in that** the diameter (23) of the counterbore (27) is between 1.5 mm and 8 mm greater than the diameter (22) of the bore (20).

3. A bearing arrangement according to claim 1 and/or 2, **characterized in that** the securing lid (1) is formed with a U-shaped profile surrounding the front (33) of the bearing bush (3) and is partially arranged between the bearing bush (3) and the universal joint housing (2), and the securing lid (1) encloses the bearing bush (3) at least partially in a circumferential direction to the axis (25).

4. A bearing arrangement according to any one of the preceding claims, **characterized in that** the securing lid (1) has a central axis (10) which can be positioned coaxially to the axis (25), wherein the securing lid (1) has a cylindrical lateral part (11) arranged coaxially to the central axis (10) and extending in the direction of the central axis (10), and the securing lid (1) can be fixed in the universal joint housing (2) in an axial direction of the central axis (10) by way of the lateral part (11).

5. A bearing arrangement according to the preceding claim, **characterized in that** the securing lid (1) has a disk-shaped bearing part (13) having a bearing surface (14), which disk-shaped bearing part adjoins the lateral part (11) and extends inwards in a radial direction in relation to the central axis (10) towards the central axis (10); and the bearing surface (14) of the securing lid (1) can be brought to rest at least partially against the front side (31) of the bearing bush (3).

6. A bearing arrangement according to any one of the preceding claims 4 to 5, **characterized in that** the lateral part (11) has a cylindrical mounting surface (15) that is arranged concentrically to the central axis (10), and the mounting surface (15) can be brought to rest indirectly or directly against a surface (21) provided in the universal joint housing (2).

7. A bearing arrangement according to the preceding claim, **characterized in that** the securing lid (1) can be fixed to the surface (21) in an axial and radial direction of the central axis (10) by way of the mounting surface (15) using an adhesive.

8. A bearing arrangement according to claim 6, **characterized in that** the securing lid (1) has at least one fastener (16) that is arranged at the lateral part (11), and the securing lid (1) can be positively and/or frictionally fixed to the surface (21) in an axial and radial direction of the central axis (10) by way of the fastener (16).

9. A bearing arrangement according to the preceding claim, **characterized in that** the fastener (16) is formed as a claw or a thread at least partially directed outward in a radial direction in relation to the central axis (10), and the securing lid (1) can be non-positively and/or positively fixed in the universal joint housing (2) by way of the fastener (16) and the surface (21), and/or the surface (21) has an internal thread for the fastener (16).

10. A bearing arrangement according to any one of the preceding claims, **characterized in that** the securing lid (1) is not closed in a circumferential direction to the central axis (10), and the securing lid (1) may be compressed in a circumferential direction, wherein the securing lid (1) has at least one separation joint (19) that is arranged in a radial direction to the central axis.

11. A bearing arrangement according to the preceding claim, **characterized in that** the separation joint (19) is formed as a predetermined breaking point and can be closed at least partially after the securing lid (1) has been mounted in the bore.

12. A bearing arrangement according to the preceding claim, **characterized in that** the separation joint (19) can be closed at least partially using a solder.

13. A bearing arrangement according to the preceding claim, **characterized in that** seats (17) are provided in the bearing part (13), by way of which seats the securing lid (1) can be reduced in a diameter (22) using a tool.

## Revendications

1. Ensemble palier arrêté pour au moins un tourillon (4) d'un joint de cardan, le tourillon étant pivotant autour d'un axe de rotation (40), comportant
a) au moins un boîtier de joint de cardan (2) avec au moins un trou (20) s'étendant dans une direction d'un axe (25) et présentant une surface intérieur (26), et
b) un coussinet de palier (3) disposé dans le trou (20) et présentant un axe de palier (30) pour le tourillon (4), dans lequel le tourillon (4) peut être monté pivotant au moins autour de son axe de rotation (40), et
c) un élément d'arrêt (1) pour arrêter le coussinet de palier (3) à l'intérieur du trou (20) dans une direction axiale de l'axe de palier (30) détournée du tourillon (4), dans lequel
d) l'élément d'arrêt (1) est disposé entre le coussinet de palier monté (3) et le boîtier de joint de cardan (2) dans une direction radiale de l'axe de palier (30) et est relié au boîtier de joint de cardan (2) entre le coussinet de palier monté (3) et le boîtier de joint de cardan (2), **caractérisé en ce que**
e) le boîtier de joint de cardan (2) présente un lamage (27) au trou (20), le lamage formant une surface (21) coaxiale et parallèle au trou (20), et l'élément d'arrêt est relié à engagement positif au boîtier de joint de cardan (2) en tant que couvercle d'arrêt (1) par voie de ladite surface (21), dans lequel le lamage (27) présente une profondeur (28) comprise entre 3 mm et 35 mm en partant de l'orifice (24) du trou (20).

2. Ensemble palier selon la revendication 1, **caractérisé en ce que** le diamètre (23) du lamage (27) est entre 1,5 mm et
8 mm plus grand que le diamètre (22) du trou (20).

3. Ensemble palier selon la revendication 1 et/ou 2, **caractérisé en ce que** le couvercle d'arrêt (1) est formé avec un profil en U entourant le front (33) du coussinet de palier (3) et est disposé partiellement entre le coussinet de palier (3) et le boîtier de joint de cardan (2), et le couvercle d'arrêt (1) enferme au moins partiellement le coussinet de palier (3) dans une direction circonférentielle par rapport à l'axe (25).

4. Ensemble palier selon l'une quelconque des revendications précédentes, **caractérisé en ce que** le couvercle d'arrêt (1) présente un axe central (10) qui peut être positionné coaxialement par rapport à l'axe (25), dans lequel le couvercle d'arrêt (1) présente une partie latérale cylindrique (11) disposée coaxialement par rapport à l'axe central (10) et s'étendant dans une direction de l'axe central (10), et le couvercle d'arrêt (1) peut être fixé par voie de la partie latérale (11) dans le trou (20) dans une direction axiale de l'axe central (10) dans le boîtier de joint de cardan (2).

5. Ensemble palier selon la revendication précédente, **caractérisé en ce que** le couvercle d'arrêt (1) présente une partie portante (13) en forme de disque avec une surface portante (14), la partie portante se raccordant à la partie latérale (11) et s'étendant par rapport à l'axe central (10) dans une direction radiale vers l'intérieur et vers l'axe central (10), et la surface portante (14) du couvercle d'arrêt (1) peut être mise au moins partiellement contre le front (31) du coussinet de palier (3).

6. Ensemble palier selon l'une quelconque des revendications précédentes 4 à 5, **caractérisé en ce que** la partie latérale (11) présente une surface de montage cylindrique (15) disposée de manière concentrique par rapport à l'axe central (10), et la surface de montage (15) peut être mise indirectement ou directement contre une surface (21) prévue dans le boîtier de joint de cardan (2).

7. Ensemble palier selon la revendication précédente, **caractérisé en ce que** le couvercle d'arrêt (1) peut être fixé à la surface (21) dans une direction axiale et radiale de l'axe central (10) par voie de la surface de montage (15) à l'aide d'un collant.

8. Ensemble palier selon la revendication 6, **caractérisé en ce que** le couvercle d'arrêt (1) présente au moins un moyen de fixation (16) disposé à la partie latérale (11), et le couvercle d'arrêt (1) peut être fixé à engagement positif et/ou par friction à la surface (21) dans une direction axiale et radiale de l'axe central (10) par voie du moyen de fixation (16).

9. Ensemble palier selon la revendication précédente, **caractérisé en ce que** le moyen de fixation (16) est formé en tant que griffe ou filetage au moins partiellement dirigés vers l'extérieur dans une direction radiale par rapport à l'axe central (10), et le couvercle d'arrêt (1) peut être fixé par liaison de force et/ou à engagement positif dans le boîtier de joint de cardan (2) par voie du moyen de fixation (16) et de la surface (21), et/ou la surface (21) présente un filetage intérieur pour le moyen de fixation (16).

10. Ensemble palier selon l'une quelconque des revendications précédentes, **caractérisé en ce que** le couvercle d'arrêt (1) n'est pas fermé dans une direction circonférentielle par rapport à l'axe central (10), et le couvercle d'arrêt (1) peut être comprimé dans une direction circonférentielle, dans lequel le couvercle d'arrêt (1) présente au moins une fente de séparation (19) disposée dans une direction radiale par rapport à l'axe central.

11. Ensemble palier selon la revendication précédente, **caractérisé en ce que** la fente de séparation (19) est formée en tant que point destiné à la rupture et peut être fermée au moins partiellement après le montage du couvercle d'arrêt (1) dans le trou.

12. Ensemble palier selon la revendication précédente, **caractérisé en ce que** la fente de séparation (19) peut être fermée au moins partiellement à l'aide d'un métal d'apport.

13. Ensemble palier selon la revendication précédente, **caractérisé en ce que** des logements (17) sont prévus dans la pièce portante (13), par lesquels un diamètre (22) du couvercle d'arrêt (1) peut être réduit en utilisant un outil.
